(19) Europäisches Patentamt
European Patent Office
Office européen des brevets

(11) **EP 1 693 229 B1**

(12) **EUROPEAN PATENT SPECIFICATION**

(45) Date of publication and mention
of the grant of the patent:
**09.01.2008 Bulletin 2008/02**

(51) Int Cl.:
***B60C 9/08*** *(2006.01)*

(21) Application number: **06003137.4**

(22) Date of filing: **16.02.2006**

(54) **Pneumatic tire for passenger cars**

PKW-Reifen

Pneumatique pour automobile

(84) Designated Contracting States:
**DE FR IT**

(30) Priority: **18.02.2005 JP 2005041814**

(43) Date of publication of application:
**23.08.2006 Bulletin 2006/34**

(73) Proprietor: **THE YOKOHAMA RUBBER CO., LTD.**
**Tokyo 105-8685 (JP)**

(72) Inventor: **Hanada, Ryoji**
**The Yokohama Rubber Co., Ltd.**
**Hiratsuka-shi**
**Kanagawa-ken (JP)**

(74) Representative: **HOFFMANN EITLE**
**Patent- und Rechtsanwälte**
**Arabellastrasse 4**
**81925 München (DE)**

(56) References cited:
**US-A1- 2004 011 450**

**Description**

BACKGROUND OF THE INVENTION

The present invention relates to pneumatic tires for passenger cars.

In general, conventional pneumatic tires for passenger cars include a cross-sectionally triangular bead filler disposed radially outwardly of a bead core embedded in each bead. The bead filler is formed of rubber higher in hardness than that used for tire components surrounding it, and it is known that driving stability can be improved by heightening the bead filler to increase sidewall rigidity (see Japanese patent application Kokai publication No. 9-249006, for example).

However, if the bead filler is heightened as described above, the weight of the bead filler increases accordingly; thus, problems arise such as an increase in tire weight and also deterioration of ride comfort due to an increase in sidewall rigidity.

US 2004/0011450 A1, corresponding with the preamble of claim 1, discloses a pneumatic tire for passenger cars that has a tread and left and right beads, the beads each having a bead core embedded therein with a bead filler disposed on the outer circumferential side of the bead core, at least one carcass ply being arranged to extend between the beads, the carcass ply having reinforcing cords which extend in a width direction of the tire and are aligned at a predetermined interval along a circumferential direction of the tire, and two belt plies being disposed on the outer circumferential side of the carcass ply in the tread. An average of residual strain of the reinforcing cords of an innermost carcass ply is set to -10% to 5% in each side region located between an outer circumferential end of the bead filler and an end of an overlapping portion of the two belt plies.

SUMMARY OF THE INVENTION

According to the present invention, there is provided a pneumatic tire for passenger cars having: right and left beads, the beads including a bead core embedded in each of the beads, a bead filler disposed radially outwardly of the bead cord; at least one carcass ply extending between the right and left beads through a tread, the at least one carcass ply having reinforcing cords (f) which extend in a radial direction of the tire and are disposed at predetermined intervals in a circumferential direction of the tire; and a plurality of belt plies placed radially outwardly of the at least one carcass ply in the tread, a widest belt ply of the plurality of belt plies having opposing edges, characterised in that: the bead filler has a radially outer edge located at a position which is closer to the radially inner side of the tire than is a position of 50% of the section height of the tire; and the reinforcing cords of the at least one carcass ply have mean residual strain, the mean residual strain being -10% to 3% in a portion (X) of the at least one carcass ply located in a region from each of said opposing edges of the widest belt ply to a position that is 30 mm away widthwisely inwardly of the tire therefrom, the residual strain being defined as $100(M-M')/M'$, where M' is the residually-strained length of the reinforcing cords in the carcass ply in said portion and M is the unstrained length of the reinforcing cords in said portion when removed from the carcass ply.

Embodiments of such a pneumatic tire for passenger cars can improve driving stability without an increase in weight and without deterioration of ride comfort.

In disclosed embodiments of pneumatic tires for passenger cars, since the region in each shoulder area of the tread that greatly affects on driving stability can be made higher in rigidity, driving stability can be enhanced without increasing the height of the bead filler, while an increase in tire weight and deterioration in ride comfort due to an increase in sidewall rigidity are not incurred since it is sufficient simply by changing in the region the mean residual strain of the reinforcing cords of the carcass ply that conventionally exists.

BRIEF DESCRIPTION OF THE DRAWINGS

For a better understanding of the invention and to show how the same may be carried into effect, reference will now be made, by way of example, to the accompanying drawings, in which:

FIG. 1 is a partial cross-sectional view showing an embodiment of a pneumatic tire for passenger cars according to the present invention taken in a plane that contains the axis of rotation of the tire;

FIG. 2 illustrates carcass plies and belt plies shown in FIG. 1; and

FIG. 3 is a graph showing a distribution state of mean residual strain of the reinforcing cords of a carcass ply in the tread, in which the distance from the tire center line is plotted along the abscissa where the position of the tire center line is 0 and the mean residual strain along the ordinate.

DETAILED DESCRIPTION

An embodiment of the present invention will be described in detail below with reference to the attached drawings.

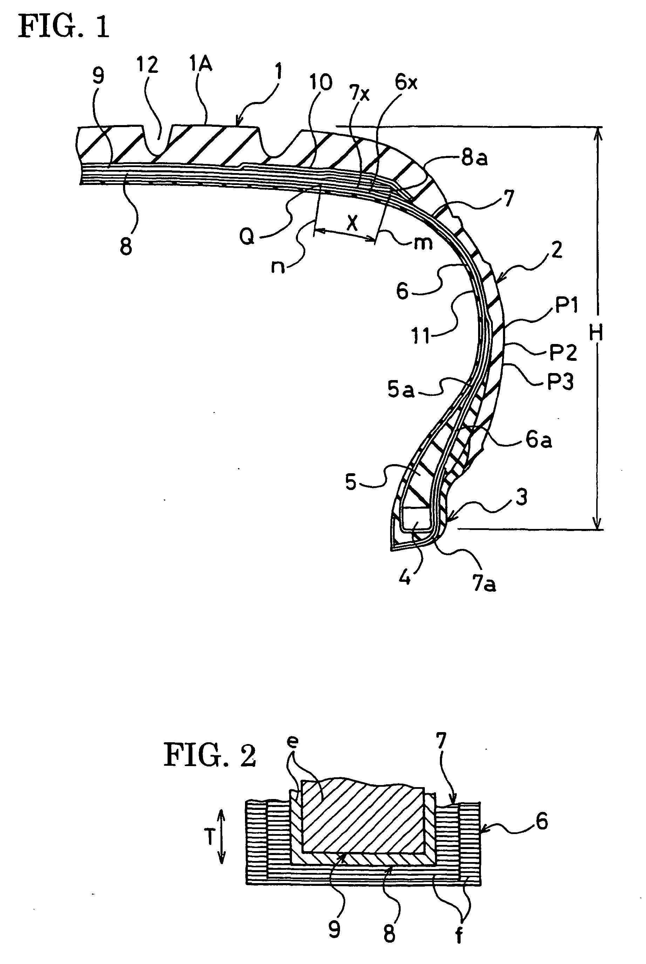

Referring to FIG. 1, there is shown an embodiment of a pneumatic tire for passenger cars according to the present invention; reference numeral 1 denotes a tread, reference numeral 2 denotes a sidewall, and reference numeral 3 denotes a bead.

A bead core 4 is embedded in each of the right and left beads 3, and a cross-sectionally triangular bead filler 5 is disposed radially outwardly of the bead core 4, the bead filler extending to the sidewall 2 side. The bead filler 5, which is formed of rubber higher in hardness than that used for tire components surrounding the bead filler, has a radially outer edge 5a that is located closer to the radially inner side of the tire than is the position P1 of 50 % of the section height H of the tire from the tire radially inner side, preferably closer than is the position P2 of 45 %, and more preferably closer than is the position P3 of 40 %; the height of the bead filler is lowered. The lower limit position of the radially outer edge 5a is suitably adjusted based on tire sizes and types; in general, it is located at a position of about 20 % of the tire section height H from the tire radially inner side.

Two carcass plies 6 and 7 extend between the right and left beads 3 through the sidewalls 2 and tread 1; as shown in FIG. 2, the carcass plies each comprise a rubber layer and reinforcing cords f of organic fiber cords such as nylon cords or polyester cords arranged therein, the reinforcing cords f extending in the radial direction of the tire and being disposed at predetermined intervals in the circumferential direction T of the tire. The two carcass plies 6 and 7 includes a first carcass ply 6 disposed inwardly of the tire and a second carcass ply 7 disposed outwardly of the first carcass ply. The first carcass ply 6 has opposing ends 6a, each of which is turned up around the bead core 4 from the inner side of the tire toward the outer side thereof with the bead filler 5 being sandwiched. The second carcass ply 7 has opposing ends 7a, each of which extends toward the inner side of the bead core 4 from the outer side thereof.

Two belt plies 8 and 9 are disposed radially outwardly of the second carcass ply 7 in the tread 1; as shown in FIG. 2, the belt plies each have reinforcing cords e of steel cords that extend in the radial direction of the tire and are arranged at predetermined intervals in the circumferential direction T of the tire. The two belt plies 8 and 9 includes a first belt ply 8 disposed adjacent to the second carcass ply 7 and a second belt ply 9 disposed radially outwardly of the first belt ply, and the first belt ply 8 is greater in width than the second belt ply 9. The oblique reinforcing cords e of the two belt plies 8 and 9 cross each other in such a manner that they are inclined in opposite directions with respect to the circumferential direction T of the tire.

Provided radially outwardly of the second belt ply 9 are belt cover plies 10 that have organic fiber cords such as nylon cords spirally wound around the circumference of the tire. Reference numeral 12 denotes a circumferential groove extending in the circumferential direction T of the tire in the tread surface 1A of the tread 1.

The above carcass plies 6 and 7 have portions 6x and 7x in which the mean residual strain of the reinforcing cords f ranges from -10 % to 3 %, the portions 6x and 7x being located in regions X from the opposing edges 8a of the wider first belt ply 8 to positions Q that are 30 mm away in length measured along the first belt ply 8 tire-widthwisely inward from the opposing edges 8a (regions between normal lines m drawn to the second carcass ply 7 from the edges 8a and normal lines n drawn to the second carcass ply 7 from the positions Q).

The present inventor has found the following through intense study and repeated experiments on driving stability in pneumatic tires for passenger cars.

That is, an increase in sidewall rigidity makes ride comfort lower, so the present inventor has focused attention to the tread that does not greatly affect on ride comfort. When the tread was checked for driving stability varying tread rigidity, it was found that an increase in tread rigidity in a region from each of the opposing edges of the widest belt ply to a position that is 30 mm away therefrom toward the tire-widthwisely inner side (tire center side) could improve driving stability. Probably, it is speculated that the same effect as a belt ply increases an effective width can be produced, whereby driving stability can be improved.

However, if a new reinforcing member is added in the region to increase tread rigidity, problems arise such as an increase in weight and also deterioration of ground contact characteristics. Therefore, the present inventor noted a carcass ply extending between the beads through the tread.

The carcass ply has reinforcing cords; if the tension of the reinforcing cords can be made higher, the rigidity of the carcass ply increases, whereby tread rigidity can be increased. Accordingly, if the tension of a carcass ply is rendered higher than before in the above-described region that makes a great contribution to driving stability, tread rigidity can be increased in the region without adding any new reinforcing member.

Since a pneumatic tire is produced through a curing step, compressive residual strain (residual strain in a state in which the cords are twisted back and loosed) generally remains in the reinforcing cords of the carcass ply after curing. Studying the relationship between the compressive residual strain and the rigidity of a carcass ply, reinforcing cords having low compressive residual strain are not greatly twisted back, and the rigidity of the carcass ply is high. As the compressive residual strain is smaller, the carcass ply can be greater in rigidity, making further use of the rigidity of the reinforcing cords formed of organic fiber.

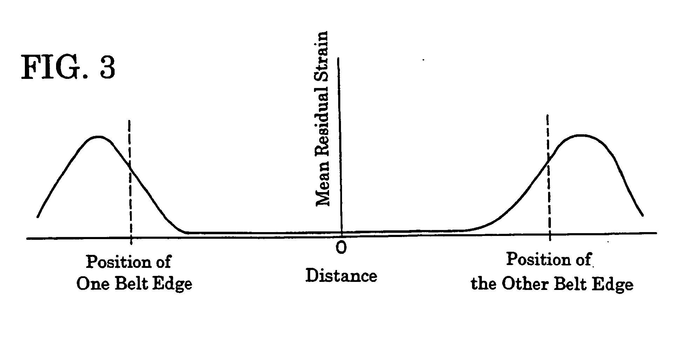

In view of this, when the residual strain of the reinforcing cords of carcass plies of conventional pneumatic tires for passenger cars was measured, the mean residual strain was about 2 % (state where the reinforcing cords are twisted back and loosed) in a region of the tread in which belt plies were located. When the mean residual strain of the reinforcing cords of the carcass plies was further checked in detail in the tread, as shown in FIG. 3, the mean residual strain was in such a distribution state that it was low in portions of the reinforcing cords located on the center side of the carcass ply, and high in portions of the reinforcing cords located on both sides thereof; the mean residual strain was 5 to 8 % in regions from positions of the opposing edges of the widest belt ply to positions 30 mm away tire-widthwisely inward therefrom, and 0 to 0.5 % in the center side region therebetween. Thus, if the mean residual strain of the reinforcing cords can be made lower than the above values, that is, the tension of the reinforcing cords can be increased in the regions from the positions of the opposing edges of the widest belt ply to the positions 30 mm away tire-widthwisely inward therefrom, driving stability can be improved without adding any new reinforcing member.

Therefore, in various embodiments, the mean residual strain of the reinforcing cords f ranges from -10 % to 3 % in the portions 6x and 7x of the carcass plies 6 and 7 that are located in the regions X from the edges 8a of the first belt ply 8 to the positions Q that are 30 mm away tire-widthwisely inward therefrom, as described above. This allows for improvement in driving stability without heightening the bead filler 5, while an increase in tire weight and deterioration in ride comfort due to an increase in rigidity of the sidewalls 2 can be avoided because it is sufficient simply by increasing the rigidity of the carcass plies 6 and 7 that conventionally exist in the regions X utilizing the mean residual strain of the reinforcing cords f.

If the widths of the regions X are less than 30 mm, it is difficult to effectively improve driving stability. The regions X may be widened tire-widthwisely inwardly beyond the positions Q of 30 mm; however, because an improvement effect of driving stability is substantially in the same level even if the regions X are widened beyond the positions Q of 30 mm, it is sufficient to be 30 mm in width. If the regions X are widened to the sidewalls 2 side beyond the edges 8a of the first belt ply 8, it is not preferable because it affects on ride comfort and curing failure may be caused during manufacturing of tires.

If the mean residual strain of the reinforcing cords f is less than -10 % in the portions 6x and 7x of the carcass plies 6 and 7, it is not preferable because tire uniformity is abruptly degraded. If the mean residual strain of the reinforcing cords f is greater than 3 % in the portions 6x and 7x of the carcass plies 6 and 7, it is difficult to effectively improve driving stability. The mean residual strain of the reinforcing cords f is preferably in the range of -10 to 2 %, more preferably -10 to 0 % in the portions 6x and 7x of the carcass plies 6 and 7.

In general, a pneumatic tire is manufactured by building a green tire that is smaller in profile (size) than the molding surface of a curing mold, and then by curing the green tire in the curing mold with the green tire being inflated with a bladder to press against the molding surface in a curing process; the above-described pneumatic tire can be manufactured by building a green tire in which tread portions located in the regions X are brought closer to a state where the tread portions are pressed against the molding surface of the curing mold, and then by curing the green tire as is conventional, for example.

Pneumatic tires, formed in embodiments according to the present invention, that include a carcass ply that has reinforcing cords f the mean residual strain of which is a minus value can be obtained by using for the reinforcing cords f of the carcass ply organic fiber cords with high heat shrinkages obtained by changing the method of dipping treatment thereof.

In the above embodiment of the present invention, the mean residual strain of the reinforcing cords f ranges as described above in the portions 6x and 7x of the two carcass plies 6 and 7; however, the mean residual strain of the reinforcing cords f may range as described above in the portions of at least one of the carcass plies.

There is shown in the above embodiment an example of a pneumatic tire for passenger cars having two carcass plies; however, embodiments of the present invention may have at least one carcass ply. Embodiments of the present invention may have two or more belt plies; in this case, the regions X range from the opposing edges of the widest belt ply to positions that are 30 mm away tire-widthwisely inward therefrom along the widest belt ply.

In a pneumatic tire formed in an embodiment in accordance with the present invention, the mean residual strain of the reinforcing cords f in each portion 6x of the first carcass ply 6 is measured as follows.

First, the inner liner 11 is removed from the pneumatic tire to expose the first carcass ply 6. Marking is then applied to a plurality of (two to five) reinforcing cords f of the first carcass ply 6 that are arbitrary measurement targets at a position corresponding to the edge 8a of the first belt ply 8 and a position corresponding to the position Q that is 30 mm away from the edge 8a. A non-expandable tape is stuck to the marked reinforcing cords f therealong to transfer the markings to the non-expandable tape. Thereafter, the plurality of marked reinforcing cords f were extracted from the tire, and the residual strain of each marked reinforcing cord f in the portion 6x of the first carcass ply 6 is calculated based on the length between the markings on each extracted reinforcing cord f and the length between the corresponding markings transferred to the non-expandable tape.

More specifically, if M is the length between the positions marked on each extracted reinforcing cord f corresponding to the edge 8a of the first belt ply 8 and to the position Q, and if M' is the length between the positions corresponding to the edge 8a of the first belt ply 8 and to the position Q on the non-expandable tape to which the markings are transferred, the residual strain S (%) of each reinforcing cord f in the region X is calculated by the following equation.

$$S=100(M-M')/M'$$

The above measurement is performed at six substantially evenly spaced locations around the circumference of the tire; the average of the obtained values of residual strain S is the mean residual strain of the reinforcing cords f in the portion 6x of the first carcass ply 6.

The measurement of the mean residual strain of the reinforcing cords f in the portion 7x of the second carcass ply 7 is performed as in the above after removal of the first carcass ply 6.

EXAMPLE

Prepared, respectively, were test tires formed according to the present invention denoted test tires 1 to 4, a comparison tire and a conventional tire, each having a tire size of 225/50R16 and a tire construction shown in FIG. 1, in which the mean residual strain of the reinforcing cords (polyester cords) in the portions of the carcass plies in the regions X was as shown in Table 1.

In each test tire, the radially outer edge of each bead filler was located at a position of 45 % of the tire section height H.

The test tires were seated on standard rims, inflated to an air pressure of 220 kPa, and subjected to evaluation testing for driving stability according to the following testing method, obtaining the results shown in Table 1. Driving Stability

The test tires were mounted on a vehicle of 3000cc displacement; feeling testing for driving stability was conducted by a test driver on a test course. The evaluation results are represented by a five-point method (0.5 point increments) where the conventional tire is 3. As the point value is greater, driving stability is better. It should be noted that "3+" in Table 1 means that the driver felt that it was slightly better than "3", but there was no significant difference therebetween.

Table 1

|  | Mean Residual Strain (%) | Driving Stability |
|---|---|---|
| Conventional Tire | 5.0 | 3 |
| Comparison Tire | 3.5 | 3+ |
| Test Tire 1 | 3.0 | 3.5 |
| Test Tire 2 | 1.5 | 3.5 |
| Test Tire 3 | 0.5 | 4.0 |
| Test Tire 4 | -0.5 | 4.0 |

As can be seen from Table 1, tires formed in accordance with the present invention can effectively improve driving stability.

Claims

1. A pneumatic tire for passenger cars having:

right and left beads (3), the beads including a bead core (4) embedded in each of the beads, a bead filler (5) disposed radially outwardly of the bead cord (4);
at least one carcass ply (6, 7) extending between the right and left beads through a tread (1), the at least one carcass ply having reinforcing cords (f) which extend in a radial direction of the tire and are disposed at predetermined intervals in a circumferential direction of the tire; and
a plurality of belt plies (8, 9) placed radially outwardly of the at least one carcass ply in the tread, a widest belt ply (8) of the plurality of belt plies having opposing edges (8a),

**characterised in that**:

the bead filler has a radially outer edge (5a) located at a position which is closer to the radially inner side of the tire than the position of 50% of the section height of the tire; and

the reinforcing cords of the at least one carcass ply have mean residual strain, the mean residual strain being -10% to 3% in a portion (X) of the at least one carcass ply located in a region from each of said opposing edges (8a) of the widest belt ply (8) to a position that is 30 mm away widthwisely inwardly of the tire therefrom, the residual strain being defined as 100(M-M')/M', where M' is the residually-strained length of the reinforcing cords in the carcass ply in said portion and M is the unstrained length of the reinforcing cords in said portion when removed from the carcass ply.

2. A pneumatic tire for passenger cars according to claim 1, wherein the mean residual strain of the reinforcing cords (f) is -10% to 2% in the portion of the at least one carcass ply (6, 7).

3. A pneumatic tire for passenger cars according to claim 2, wherein the mean residual strain of the reinforcing cords (f) is -10% to 0% in the portion of the at least one carcass ply (6,7).

4. A pneumatic tire for passenger cars according to any one of claims 1 to 3, wherein the radially outer edge (5a) of the bead filler (5) is located at a position closer to the radially inner side of the tire than is a position of 45% of the section height of the tire.

5. A pneumatic tire for passenger cars according to claim 4, wherein the radially outer edge (5a) of the bead filler (5) is located at a position closer to the radially inner side of the tire than the position of 40% of the section height of the tire.

6. A pneumatic tire for passenger cars according to any one of claims 1 to 5, wherein the at least one carcass ply (6,7) comprises a first carcass ply (6) and a second carcass ply (7) disposed outwardly of the first carcass ply (6), the first carcass ply (6) having opposing ends (6a) each turning up around the bead core (4) from an inner side of the tire toward an outer side thereof, the second carcass ply (7) having opposing ends (7a) each extending inwardly from an outer side of the bead core (4).

7. A pneumatic tire for passenger cars according to any one of claims 1 to 6, wherein the plurality of belt plies (8,9) include a first belt ply (8) adjacent to the at least one carcass ply (6,7) and a second belt ply (9) disposed radially outwardly thereof, the widest belt ply (8) being the first belt ply (8).

8. A pneumatic tire for passenger cars according to any one of claims 1 to 7, wherein the reinforcing cords (f) of the at least one carcass ply (6,7) are formed from organic fiber cords.

**Patentansprüche**

1. Luftreifen für Passagierfahrzeuge, umfassend:

rechte und linke Wülste (3), wobei die Wülste einen Wulstkern (4) umfassen, welcher in jedem der Wülste eingebettet ist, einen Wulstfüller (5), welcher radial auswärts der Wulstkorde (4) angeordnet ist;
zumindest eine Karkassenlage (6, 7), welche sich zwischen den rechten und linken Wülsten durch eine Lauffläche (1) erstreckt, wobei zumindest eine Karkassenlage Verstärkungskorden (f) aufweist, welche sich in einer radialen Richtung des Reifens erstrecken und in vorbestimmten Intervallen in einer Umfangsrichtung des Reifens angeordnet sind; und
eine Mehrzahl von Gürtellagen (8, 9), welche radial auswärts der zumindest einen Karkassenlage in der Lauffläche angeordnet sind, wobei eine breiteste Gürtellage (8) der Mehrzahl der Gürtellagen einander gegenüberliegende Kanten (8a) aufweist,

**dadurch gekennzeichnet, dass**
der Wulstfüller eine radiale äußere Kante (5a) aufweist, welche in einer Position angeordnet ist, welche näher zu der radialen inneren Seite des Reifens hin liegt als eine Position von 50% der Schnitthöhe des Reifens; und
die Verstärkungskorden der zumindest einen Karkassenlage eine mittlere Restdehnung (engl.: mean residual strain) aufweisen, wobei die mittlere Restdehnung -10% bis 3% in einem Abschnitt (X) der zumindest einen Karkassenlage, welcher in einem Bereich von jeder der einander gegenüberliegenden Kanten (8a) der breitesten Gürtellage (8) bis zu einer Position, welche von diesen aus 30 mm einwärts in der Breitenrichtung des Reifens liegt, beträgt, wobei die Restdehnung als 100 (M-M')/M' definiert ist, wobei M' die restgedehnte Länge der Verstärkungskorden in der Karkassenlage in dem Bereich ist, und M die ungedehnte Länge der Verstärkungskorden in dem Bereich ist, wenn sie aus der Karkassenlage entfernt ist.

2. Luftreifen für Personenfahrzeuge gemäß Anspruch 1, wobei die mittlere Restdehnung der Verstärkungskorden (f) in dem Bereich der zumindest einen Karkassenlage (6, 7) -10% bis 2% ist.

3. Luftreifen für Personenfahrzeuge gemäß Anspruch 2, wobei die mittlere Restdehnung der Verstärkungskorden (f) in dem Bereich der zumindest einen Karkassenlage (6, 7) -10% bis 0% ist.

4. Luftreifen für Personenfahrzeuge gemäß einem der Ansprüche 1-3, wobei die radiale äußere Kante (5a) des Wulstes (5) in einer Position angeordnet ist, die näher zu der radialen Innenseite des Reifens liegt als eine Position von 45% der Schnitthöhe des Reifens.

5. Luftreifen für Personenfahrzeuge gemäß Anspruch 4, wobei die radiale äußere Kante (5a) des Wulstes (5) in einer Position angeordnet ist, die näher zu der radialen inneren Seite des Reifens liegt als die Position von 40% der Schnitthöhe des Reifens.

6. Luftreifen für Personenfahrzeuge gemäß einem der Ansprüche 1-5, wobei die zumindest eine Karkassenlage (6, 7) eine erste Karkassenlage (6) und eine zweite Karkassenlage (7) umfasst, welche auswärts der ersten Karkassenlage (6) angeordnet ist, wobei die erste Karkassenlage (6) gegenüberliegende Enden (6a) aufweist, die jeweils um den Wulstkern (4) herum von einer inneren Seite des Reifens in Richtung von dessen äußerer Seite gelegt sind, wobei die zweite Karkassenlage (7) gegenüberliegende Enden (7a) aufweist, welche sich von einer äußeren Seite des Wulstkernes (4) aus einwärts erstrecken.

7. Luftreifen für Personenfahrzeuge gemäß einem der Ansprüche 1-6, wobei die Mehrzahl der Gürtellagen (8, 9) eine erste Gürtellage (8) umfasst, welche neben der zumindest einen Karkassenlage (6, 7) liegt, und eine zweite Gürtellage (9), welche radial auswärts von dieser liegt, wobei die breiteste Gürtellage (8) die erste Gürtellage (8) ist.

8. Luftgreifen für Personenfahrzeuge gemäß einem der Ansprüche 1-7, wobei die Verstärkungskorden (f) der zumindest einen Karkassenlage (6, 7) aus organischen Faserkorden geformt sind.

**Revendications**

1. Bandage pneumatique pour des voitures particulières, comportant:

des talons gauche et droit, les talons comprenant une tringle (4) noyée dans chacun des talons, un bourrage sur tringle (5) disposé radialement à l'extérieur de la tringle (4);
au moins une couche de carcasse (6,7) s'étendant entre les talons droit et gauche à travers une bande de roulement (1), au moins une couche de carcasse précitée ayant des cordes de renforcement (f) qui s'étendent dans une direction radiale du bandage et sont disposées à des intervalles prédéterminées dans une direction circonférentielle du bandage; et
plusieurs couches de ceinture (8,9) placées radialement à l'extérieur d'au moins une couche de carcasse précitée dans la bande de roulement, une couche de ceinture la plus large (8) de la pluralité de couches de ceinture ayant des bords opposés (8a),

**caractérisé en ce que**:

le bourrage sur tringle présente un bord radialement extérieur (5a) situé à une position qui est plus proche du côté radialement intérieur du bandage que la position de 50% de la hauteur en section du bandage; et
les cordes de renforcement d'au moins une couche de carcasse ont une contrainte résiduelle moyenne, la contrainte résiduelle moyenne étant de -10% à 3% dans une portion (X) d'au moins une couche de carcasse située dans une région de chacun desdits bords opposés (8a) de la couche de ceinture la plus large (8) à une position qui est espacée de 30mm dans le sens de la largeur vers l'intérieur du bandage de celle-ci, la contrainte résiduelle étant définie comme 100(M-M')/M', où M' indique la longueur de contrainte résiduelle des cordes de renforcement dans la couche de carcasse dans ladite portion, et M indique la longueur non contrainte des cordes de renforcement dans ladite portion lors d'un retrait de la couche de carcasse.

**2.** Bandage pneumatique pour des voitures particulières selon la revendication 1, où la contrainte résiduelle moyenne des cordes de renforcements (f) est de -10% à 2% dans la portion d'au moins une couche de carcasse précitée (6,7).

**3.** Bandage pneumatique pour des voitures particulières selon la revendication 2, où la contrainte résiduelle moyenne des cordes de renforcement (f) est de - 10% à 0% dans la portion d'au moins une couche de carcasse précitée (6, 7).

**4.** Bandage pneumatique pour des voitures particulières selon l'une des revendications 1 à 3, où le bord radialement extérieur (5a) du bourrage sur tringle (5) se situe à une position plus proche du côté radialement intérieur du bandage qu'une position de 45% de la hauteur en section du bandage.

**5.** Bandage pneumatique pour des voitures particulières selon la revendication 4, où le bord radialement extérieur (5a) du bourrage sur tringle (5) se situe à une position plus proche du côté radialement intérieur du bandage que la position de 40% de la hauteur en section du bandage.

**6.** Bandage pneumatique pour des voitures particulières selon l'une des revendications 1 à 5, où au moins une couche de carcasse (6,7) comprend une première couche de carcasse (6) et une deuxième couche de carcasse (7) disposée à l'extérieur de la première couche de carcasse (6), la première couche de carcasse (6) ayant des extrémités opposées (6a) chacune tournée vers le haut autour de la tringle (4) depuis le côté intérieur du bandage vers son côté extérieur, la deuxième couche de carcasse (7) ayant des extrémités opposées (7a) s'étendant chacune vers l'intérieur depuis un côté extérieur de la tringle (4).

**7.** Bandage pneumatique pour des voitures particulières selon l'une des revendications 1 à 6, où plusieurs couches de ceinture (8,9) comprennent une première couche de ceinture (8) adjacente à au moins une couche de carcasse précitée (6,7) ainsi qu'une deuxième couche de ceinture (9) disposée radialement à l'extérieur de celle-ci, la couche de ceinture la plus large (8) étant la première couche de ceinture (8).

**8.** Bandage pneumatique pour des voitures particulières selon l'une des revendications 1 à 7, où les cordes de renforcement (f) d'au moins une couche de carcasse précitée (6,7) sont réalisées à partir de cordes de fibres organiques.

FIG. 1

FIG. 2

FIG. 3

Position of
One Belt Edge

Mean Residual Strain

Distance

Position of
the Other Belt Edge

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9249006 A
- US 20040011450 A1